# EUROPÄISCHE PATENTSCHRIFT

(11) **EP 0 912 323 B1**
(45) Veröffentlichungstag und Bekanntmachung des Hinweises auf die Patenterteilung: **16.08.2000**
(21) Anmeldenummer: 96941008.3
(22) Anmeldetag: 21.11.1996
(51) Int. Cl.: B29C 73/10

(54) **REPARATURPFLASTER FÜR LUFTREIFEN**
REPAIR PATCHES FOR PNEUMATIC TYRES
EMPLATRE POUR PNEUMATIQUES

(30) Priorität: 18.06.1996 DE 29610697 U
(43) Veröffentlichungstag der Anmeldung: 06.05.1999
(73) Patentinhaber: STAHLGRUBER Otto Gruber GmbH & Co., 81675 München (DE)
(72) Erfinder: NISSL, Herbert, D-85386 Dietersheim (DE)
(74) Vertreter: Beetz & Partner Patentanwälte
(86) Internationale Anmeldenummer: EP9605143
(87) Internationale Veröffentlichungsnummer: WO9748547

(56) Entgegenhaltungen:
- FR-A- 1 548 676
- GB-A- 240 765
- GB-A- 992 027
- US-A- 4 385 651
- US-A- 5 160 394

## Beschreibung

Die Erfindung betrifft ein Reparaturpflaster für Luftreifen, das aus mehreren unterschiedlichen und miteinander fest vulkanisierten Gummischichten besteht und eine vulkanisierfähige Auflageschicht zur Auflage auf der Innenfläche eines Luftreifens, eine schmalere Zwischenschicht mit eingebetteten, längsgerichteten Armierungseinlagen aus z.B. Stahlkord, eine weitere längsgerichtete Kordfäden enthaltende Gummischicht sowie eine Deckschicht aufweist, welche die armierte Zwischenschicht und die weitere Gummischicht überdeckt.

Diese bekannten Reparaturpflaster sind regelmäßig für Luftreifen mit Radialkarkasse geeignet und werden so auf die vorbereitete und ggf. auch ausgekehlte Innenfläche des Luftreifens vulkanisiert, daß die in der Zwischenschicht eingebetteten Stahlkordeinlagen weitestgehend parallel zu den Kordeinlagen des Radialreifens verlaufen. Die bisher verwendeten Reparaturpflaster haben über ihre Länge eine in etwa gleichmäßige Elastizität bzw. Biegsamkeit und eine viereckige, meist rechteckige Form. Beim Einlegen eines Pflasters an die gewölbte Innenwandung des Reifens zur Durchführung eines Vulkanisationsvorganges muß das Reparaturpflaster gebogen werden, um eine großflächige Anlage seiner Auflageschicht an der vorbereiteten Innenwand des Reifens zu erzielen. Aufgrund der Eigenelastizität des Pflasters, die insbesondere von den Stahlkordfäden verursacht wird, ergibt sich ein gewisser Rückfederungseffekt, durch den insbesondere die mittleren Bereiche des Pflasters sich geringfügig von der Innenwand des Luftreifens abheben können, was dann beim Vulkanisationsvorgang zu Schwierigkeiten durch Lufteinschlüsse u.dgl. führen kann. Von wesentlicherer Bedeutung ist jedoch ein Effekt, der ebenfalls auf das Bestreben der Stahlkordeinlage zur elastischen Rückverformung zurückzuführen ist. Im Betrieb des präparierten Luftreifens können sich aufgrund der auftretenden Walkbewegungen des Reifens in Verbindung mit den in der Stahlkordeinlage des Pflasters noch vorhandenen elastischen Restspannungen die freien Enden der Stahlcordstränge von dem sie umgebenden vulkanisierten Gummi freiarbeiten, was zu Ablösungen und damit zu Beschädigungen des Reifens bzw. des Pflasters führt. Diese Probleme treten insbesondere bei modernen Niederquerschnitt-Luftreifen mit hoher Tragfähigkeit im Bereich der seitlichen Reifenwandungen auf.

Ferner sind aus der US-A-4 385 651 viereckige Reparaturpflaster für Luftreifen bekannt, die in ihrem mittleren Bereich durch eine Vielzahl von Verstärkungslagen verdickt sind und eine allseitig taillierte Form haben.

Aufgabe der Erfindung ist es, ein Reparaturpflaster für Luftreifen zu schaffen, das eine qualitativ hochwertigere Vulkanisation ermöglicht und eine längere Haltbarkeit der reparierten Luftreifen, insbesondere auch der problematischen Niederquerschnitt-Luftreifen, gewährleistet.

Diese Aufgabe wird erfindungsgemäß durch die im Patentanspruch 1 angegebenen Merkmale gelöst.

Durch die taillierte Form des im wesentlichen rechteckigen Pflasters und die größere Biegsamkeit in seinem Mittelteil wird eine großflächige Anlage des gesamten Pflasters an der Reifeninnenwandung praktisch ohne Rückspreizwirkung erreicht. Darüber hinaus hat es sich überraschend gezeigt, daß die bei bisher verwendeten Reparaturpflastern nachteiligen Ablöseerscheinungen im Bereich der Endkanten der Stahlkordeinlage auch nach längeren Betriebszeiten des reparierten Reifens nicht eintreten, was möglicherweise auf die verminderten elastischen Restspannungen in den Stahlkordeinlagen aufgrund der vergrößerten Biegsamkeit im mittleren Pflasterbereich zurückgeführt werden kann. Zur verbesserten Haltbarkeit der erfindungsgemäßen Reparaturpflaster, insbesondere an den Endbereichen der Stahlkordeinlagen, trägt auch die spezielle Formgebung der inneren Schichten und ihre gegenseitige Überlappung bei. Gemäß der Erfindung ist die mit den Stahlkordeinlagen armierte Zwischenschicht an ihren beiden Endteilen verdickt und über die Stahlkordeinlagen allseitig hinausr gend vergrößert ausgeführt.

Bewährt hat sich eine Ausgestaltung der Erfindung, bei welcher die sich längs erstreckende schmalere Zwischenschicht an ihren beiden Enden stirnseitig und zu beiden Seiten vorstehende Gummilaschen aufweist, wobei die Gummimischung dieser Laschen derjenigen der die parallelen Stahlkordstränge umgebenden Gummimischung entsprechen kann.

Eine andere zweckmäßige Weiterbildung des erfindungsgemäßen Reparaturpflasters zeichnet sich dadurch aus, daß die zwischen der Deckschicht und der Zwischenschicht vorgesehene Gummischicht mit längsgerichteten Kordfäden verdickte und über die eingebetteten Kordfäden allseitig hinausragende laschenförmige Endteile aufweist.

Das Einlegen des Reparaturpflasters im Reifeninneren an die Reifenwand und die Haltbarkeit des reparierten Luftreifens wird weiter dadurch verbessert, daß die Längsachse des Pflasters gewölbt ist, wobei die Wölbung der in das Reifeninnere weisenden Deckschicht größer als die Wölbung der an der Reifenwand anliegenden Auflageschicht ist. Durch diese spezielle Wölbung kann das Pflaster durchgehend großflächig mit seiner Auflage- bzw. Verbindungsschicht an die vorgesehene Stelle der Reifeninnenwand angelegt werden, ohne daß es dabei zu Ablöseerscheinungen durch Eigenelastizität kommt.

Schließlich zeichnet sich eine besondere Ausgestaltung der Erfindung noch dadurch aus, daß die die eingebetteten Kordfäden enthaltende Gummischicht die mit Stahlkord längs armierte Zwischenschicht über deren gesamte Länge beidseitig und seitlich auch an deren Enden um vorbestimmte Beträge überdeckt.

Im folgenden wird ein Ausführungsbeispiel des erfindungsgemäßen Reparaturpflasters anhand der Zeichnung im einzelnen beschrieben. Es zeigen:
- Fig. 1: ein Reparaturpflaster in Draufsicht;
- Fig. 2: ein Reparaturpflaster im Längschnitt.

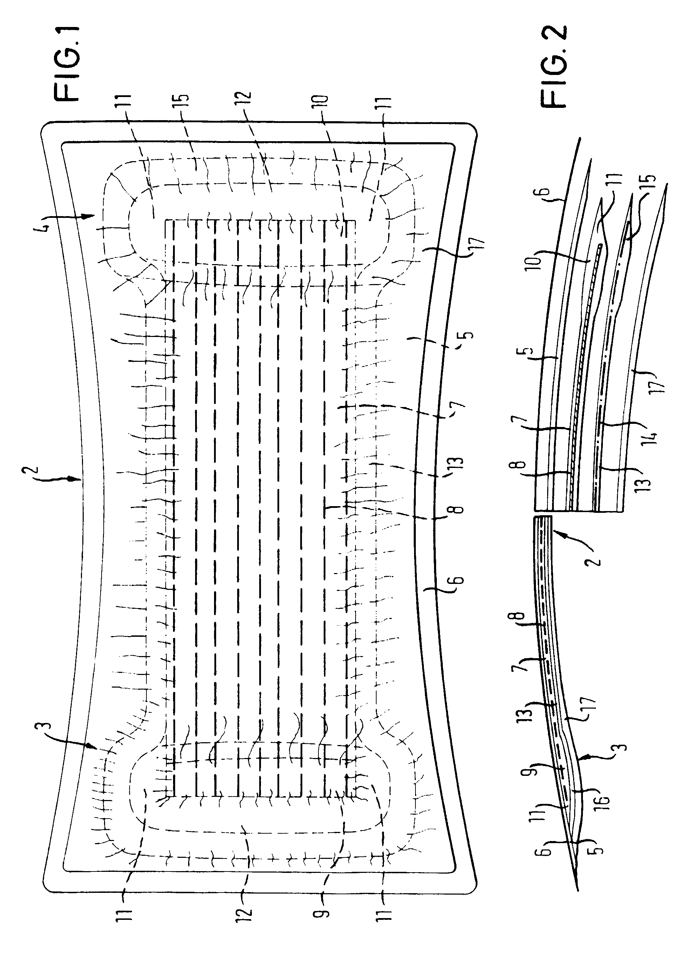

Wie aus Fig. 1 ersichtlich, hat das neue Reparaturpflaster eine im wesentlichen rechteckige Form mit einem gleichmäßig taillierten, d.h. beidseitig eingezogenen, Mittelteil 2 und verbreiterten und auch verdickten Endbereichen 3, 4. Im linken Teil der Fig. 2 ist die linke Hälfte des Reparaturpflasters im Längsschnitt dargestellt und der rechte Teil dieser Fig. 2 zeigt die einzelnen Pflasterschichten in einer auseinandergezogenen Darstellung.

Im einzelnen ist das dargestellte Reparaturpflaster wie folgt aufgebaut. Eine Auflageschicht 5 aus einem reaktionsfähigen Gummimaterial dient als Puffer- und Verbindungsschicht zu der vorbereiteten Innenwandung des Luftreifens. Bis zur Durchführung einer Reparatur ist diese teilweise farbige Auflageschicht 5 von einer Kunststoffolie 6 abgedeckt, um die Reaktionsfähigkeit der Auflageschicht 5 während der Lagerung etc. aufrechtzuerhalten. An diese Puffer- und Verbindungsschicht 5 schließt sich eine dickere Zwischenschicht 7 an, in der hochfeste Kordstränge, insbesondere Stahlkordstränge 8 in paralleler Längsausrichtung eingebettet sind. In Fig. 1 und im linken Teil der Fig. 2 sind diese Stahlkordstränge 8 durch Strichlinien angedeutet und im rechten Teil der Fig. 2 ist ein Stahlkordstrang 8 schraffiert dargestellt. Die Zwischenlage 7 weist verdickte Endbereiche 9, 10 auf, die sich in beidseitig und in stirnseitig vorstehende weichelastische Gummilaschen 11, 12 fortsetzen, so daß die aus dem schmalen armierten Mittelteil und den beiden Endteilen 9, 10 bestehende Zwischenschicht 7 in Draufsicht eine I-Form besitzt, wie dies aus Fig. 1 hervorgeht. An die Zwischenschicht 7 schließt eine weitere Gummischicht 13 an, in die - im rechten Teil der Fig. 2 strichpunktiert dargestellte - Textilkordfäden 14 in dem zur Zwischenschicht 7 nahen Wandbereich in paralleler Längsausrichtung eingebettet sind. Diese in Draufsicht I-förmige Schicht 13 überdeckt seitlich und stirnseitig die schmalere biegesteifere Zwischenschicht 7 und weist ebenfalls verbreiterte und verdickte Endbereiche 15, 16 mit nach außen kontinuierlich dünner werdenden Gummizungen ohne Kordfaden auf. Den ins Reifeninnere weisenden Abschluß bildet schließlich eine Deckschicht 17, die - wie alle anderen Schichten auch - einen allseitigen Rand von kontinuierlich bis auf Null abnehmender Wandstärke besitzt.

Die vorstehend aufgeführten Schichten sind zu dem in Fig. 1 und im linken Teil der Fig. 2 dargestellten Reparaturpflaster durchgehend miteinander verbunden, wobei die reaktionsfähige Auflageschicht 5 durch die Kunststoffolie 6 bis zum Gebrauch des Pflasters abgedeckt ist.

Durch den Verbindungsvorgang der einzelnen Schichten erhält das Pflaster eine aus Fig. 2 erkennbare längs gewölbte Kontur, wobei aufgrund der Verdickungen der armierten Zwischenschicht 7 und der mit Kordfäden 14 versehenen Gummischicht 13 in den jeweiligen Endbereichen die in das Reifeninnere weisende Pflasterseite eine größere Längswölbung als die Auflagerseite hat. Die taillierte Form und die Verdickungen der Endbereiche der Zwischen- und der Gummischicht 7, 13 bewirken, daß das erfindungsgemäße Reparaturpflaster in seinem mittleren Bereich 2 wesentlich biegsamer als in den beiden Endbereichen ist, was beim Einlegen des Reparaturpflasters in einen Reifen dazu führt, daß dieser biegsamere und beim Einlegen stärker gebogene Mittelbereich, in dem in der Regel die zerstörten Reifenstellen liegen, in dichte und großflächige Anlage an die Reifeninnenwand gelangt und nicht durch die Eigenelastizität und Rückfederung insbesondere der Stahlkordstränge teilweise abgelöst wird. Die Verdickungen in den Endbereichen haben ferner die besondere Wirkung, daß die bisher unvermeidbaren Ablöseerscheinungen im Bereich der Endkanten der Stahlkordstränge 8 auch nach längeren Betriebszeiten des reparierten Reifens nicht eintreten.

Die Erfindung ist nicht auf die dargestellte Ausführungsform beschränkt. So können statt der vorstehend beschriebenen Stahlkordstränge auch andere hochfeste strangförmige Armierungen verwendet werden, die in der Zwischenschicht 7 längs ausgerichtet und nebeneinander eingebettet sind. Ferner können die Längen und Breiten der Reparaturpflaster entsprechend den jeweils zu reparierenden Reifengrößen angepaßt sein, wobei in jedem Fall jedoch die Biegsamkeit im mittleren Bereich wesentlich höher als in den Endbereichen sein sollte. Durch die taillierte Form des erfindungsgemäßen Reparaturpflasters werden bei verbesserter Haltbarkeit die Reparaturarbeiten vereinfacht und erhebliche Mengen der verschiedenen Gummimischungen eingespart.

## Patentansprüche

1. Reparaturpflaster für Luftreifen, bestehend aus
- einer reaktionsfähigen Puffer- und Verbindungsschicht (5) zur Auflage auf der inneren Reifenwandung,
- einer schmaleren Zwischenschicht (7) mit eingebetteten nebeneinander längsgerichteten Kordeinlagen (8) aus insbesondere Stahlkordsträngen,
- einer weiteren Gummischicht (13) mit eingebetteten nebeneinander längsgerichteten Kordfäden (14), welche die armierte Zwischenschicht überdeckt, und
- einer in das Reifeninnere weisenden Deckschicht (17),
dadurch **gekennzeichnet**, daß
- das Pflaster eine taillierte Form hat und in seinem mittleren Bereich biegsamer als in den beiden Endbereichen ist, und
- die mit den Stahlkordsträngen (8) armierte Zwischenschicht (7) in ihren Endbereichen (9, 10) verdickt und durch laschenförmige Teile (11, 12) über die Stahlkordstränge (8) allseitig hinausragend vergrößert ist.

2. Reparaturpflaster nach Anspruch 1,
dadurch gekennzeichnet, daß
die zwischen der Deckschicht (17) und der Zwischenschicht (7) angeordnete Gummischicht (13) mit den längsgerichteten Kordfäden (14) verdickte und verbreiterte Endteile (15) aufweist.

3. Reparaturpflaster nach Anspruch 1 oder 2,
dadurch gekennzeichnet, daß
das Pflaster in seiner Längsachse gewölbt ist, wobei die Wölbung der Deckschicht (17) größer als die Wölbung der Auflageschicht (5) ist.

4. Pflaster nach einem der Ansprüche 1 bis 3,
dadurch gekennzeichnet, daß
die die eingebetteten Kordfäden (14) enthaltende Gummischicht (13) die mit den Stahlkordsträngen (8) armierte Zwischenschicht (7) allseitig überdeckt.

## Claims

1. A repair patch for pneumatic tires, consisting of
- a reactive buffer and connecting layer (5) to be laid on the internal wall of the tire;
- a narrower intermediate layer (7) with embedded cord inserts (8) which are aligned longitudinally, adjacent to one another, and are composed, in particular, of steel cord strands;
- a further rubber layer (13) with embedded cord threads (14) aligned longitudinally, adjacent to one another, which covers the reinforced intermediate layer, and
- a cover layer (17) facing into the interior of the tire,
**characterized** in that
- the tire has a waisted shape and is more flexible in its central region than in the two end regions, and in that
- the intermediate layer (7) reinforced with said steel cord strands (8) is thickened in its end regions (9, 10) and is enlarged by parts in the form of tabs (11, 12) which project on all sides beyond said steel cord strands (8).

2. The repair patch according to claim 1,
characterized in that
the rubber layer (13) arranged between said cover layer (17) and said intermediate layer (7) has end parts (15) which are thickened and widened with said longitudinally aligned cord threads (14).

3. The repair patch according to claim 1 or claim 2, characterized in that the patch is arched along its longitudinal axis, the curvature of said cover layer (17) being greater than the curvature of said contact layer (5).

4. The patch according to one of claims 1 to 3,
characterized in that
the rubber layer (13) containing said embedded cord threads (14) overlaps on all sides said intermediate layer (7) reinforced with said steel cord strands (8).

## Revendications

1. Emplâtre de réparation pour pneumatiques, composé
- d'une couche d'amortissement et de liaison susceptible de réaction (5) destinée à être appliquée sur la paroi intérieure du pneumatique,
- d'une couche intermédiaire (7) plus étroite comportant des inserts de câbles (8) noyés et orientés longitudinalement les uns à côté des autres et constitués en particulier de torons d'acier,
- d'une autre couche de caoutchouc (13) comportant des tronçons de câble (14) noyés et orientés longitudinalement les uns à côté des autres, qui recouvre la couche intermédiaire armée et,
- d'une couche de recouvrement (17) qui est orientée vers l'intérieur du pneumatique,
caractérisé en ce que
- l'emplâtre possède une forme découpée et est plus souple dans sa région centrale que dans les deux régions terminales, et
- la couche intermédiaire (7) armée de torons d'acier (8) est épaissie dans ses régions terminales (9, 10) et est agrandie pour déborder de tous côtés au-delà des torons d'acier (8) par des parties en forme de patte (11, 12).

2. Emplâtre de réparation selon la revendication 1, caractérisé en ce que la couche de caoutchouc (13) munie de tronçons de câble (14) orientés longitudinalement, et qui est disposée entre la couche de recouvrement (17) et la couche intermédiaire (7), présente des parties terminales (15) épaissies et élargies.

3. Emplâtre de réparation selon la revendication 1 ou 2, caractérisée en ce que l'emplâtre est bombé selon son axe longitudinal, le bombé de la couche de recouvrement (17) étant plus accentué que le bombé de la couche d'appui (5).

4. Emplâtre selon l'une des revendications 1 à 3, caractérisé en ce que la couche de caoutchouc (13) qui contient les tronçons de câble (14) noyés recouvre de tous côtés la couche intermédiaire (7) armée avec les torons d'acier (8).
